# EUROPÄISCHE PATENTSCHRIFT

(11) **EP 1 176 286 B1**
(45) Veröffentlichungstag und Bekanntmachung des Hinweises auf die Patenterteilung: **15.06.2005**
(21) Anmeldenummer: 00810663.5
(22) Anmeldetag: 26.07.2000
(51) Int. Cl.: F01D 25/28, F02C 6/12, F16M 7/00

(54) **Vorrichtung zur Befestigung einesTurboladers**
Fastening device for a turbocharger
Dispositif de fixation d'un turbocompresseur

(43) Veröffentlichungstag der Anmeldung: 30.01.2002
(73) Patentinhaber: ABB Turbo Systems AG, 5400 Baden (CH)
(72) Erfinder: Bättig, Josef, 5704 Egliswil (CH); Werro, Jean-Yves, 5432 Neuenhof (CH)
(74) Vertreter: ABB Patent Attorneys

(56) Entgegenhaltungen:
- EP-A- 0 785 389
- DE-A- 2 210 038
- DE-A- 4 432 073
- DE-C- 699 825
- FR-A- 2 307 126
- US-A- 3 173 241
- US-A- 3 851 607

## Beschreibung

### Technisches Gebiet

Die Erfindung bezieht sich auf eine Vorrichtung zum Befestigen von Turboladern auf einem Untergrund gemäss den Merkmalen des Oberbegriffes des Patentanspruches 1.

### Stand der Technik

Zur Befestigung von Turboladern auf einem Untergrund gibt es eine Reihe sehr unterschiedlicher Möglichkeiten. Da die heute eingesetzten Turbolader meist ungekühlte Gehäuse aufweisen, stellt sich bei der Befestigung von Turboladern auf meist verhältnismässig kühlem Untergrund das Problem von unterschiedlichen thermischen Ausdehnungen zwischen Turbolader und Untergrund, welche zu Spannungen in der Befestigungsvorrichtung führen. Um dieses Problem zu lösen werden in der Regel separate Befestigungsfüsse zwischen Turbolader und Untergrund eingebracht, die durch spezielle Ausgestaltung die unterschiedlichen Ausdehnungen aufnehmen können. Ausserdem erlauben es diese Befestigungsfüsse oft auch eine räumlich variable Ausrichtung von zumindest Teilen des Gehäuses des Turboladers. Separate Befestigungsfüsse der genannten Art sind beispielsweise aus DE-A-44 32 073 und DE-OS-36 41 478 bekannt.

Turbolader für spezielle Anwendungen haben meist nur eine bestimmte Stellung für das Gasaustrittsgehäuse, in Lokomotiven beispielsweise vertikal nach oben. Für solche Fälle ist ein einstückig mit dem Gasaustrittsgehäuse verbundener Befestigungsfuss bezüglich Herstellung und Montage viel kostengünstiger als ein separater Befestigungsfuss. Für gekühlte Gasaustrittsgehäuse, bei denen zwischen Untergrund und Gehäuse so gut wie keine thermischen Ausdehnungsunterschiede auftreten, ergeben sich durch den angeformten Befestigungsfuss keine Probleme. Ein Beispiel für einen solchen an ein gekühltes Gasaustrittsgehäuse angeformten Befestigungsfuss ist dem Artikel "New Turbochargers for medium and larger engines", Diesel and Gas Turbine Progress, S. 36 f, Dezember 1968, zu entnehmen. Da die Herstellung und der Betrieb von Turboladern mit gekühltem Gasaustrittsgehäuse gegenüber Turboladern mit ungekühltem Gasaustrittsgehäuse aufwendiger und teurer ist, wird eine Möglichkeit gesucht, sowohl die Vorteile von Turboladern mit angeformtem Befestigungsfuss als auch die Vorteile von Turboladern mit ungekühltem Gasaustrittsgehäuse zu nutze.

US-A-3 173 241 zeigt einen an einem Abgaskrümmen angeflamschten Turbolader.

### Darstellung der Erfindung

Aufgabe ist es daher eine Befestigungsvorrichtung für Turbolader zur Verfügung zu stellen, welche einen einstückig an ein Gasaustrittsgehäuse angeformten Befestigungsfuss aufweist und unterschiedliche thermische Ausdehnungen von Untergrund und Gasaustrittsgehäuse aufzunehmen bzw. auszugleichen vermag.

Diese Aufgabe wird gelöst durch eine Befestigungsvorrichtung mit den Merkmalen des Patentanspruches 1.

Ein an ein Gasaustrittsgehäuse einstückig angeformter Befestigungsfuss weist beabstandet voneinander Langlöcher auf, deren Längsachsen sternförmig in einem Zentrum zusammentreffen. In die Langlöcher sind Gleitschuhe einsetzbar, die in ihren durchgehenden Öffnungen Befestigungselemente, wie z.B. Schrauben aufnehmen. Mittels der Schrauben wird der einstückig an das Gasaustrittsgehäuse des Turboladers angeformte Befestigungsfuss und somit der Turbolader lösbar auf dem Untergrund befestigt. Mit Starten der mit dem Turbolader verbundenen Brennkraftmaschine heizen sich das Gasaustrittsgehäuse und der angeformte Befestigungsfuss gegenüber dem Untergrund auf. Die Ausdehnung des sich aufheizenden Materials kann dabei bis zu mehrere Millimeter betragen. Statt nun die Schrauben wie bei einer normalen Schraubverbindung zwischen Befestigungsfuss und Untergrund auf Biegung zu belasten, bewegt sich das sich ausdehnende Material des Befestigungsfusses sozusagen unter den die Schrauben haltenden Gleitschuhen auf dem Untergrund. Die Schrauben bleiben in den Gleitschuhen spannungsfrei geführt, während eine Relativbewegung des Gleitschuhes im Langloch stattfindet. Auch nach mehreren Temperaturzyklen tritt somit keine Materialermüdung auf und ein Sicherheitsrisiko durch eventuelles Versagen der Befestigung besteht nicht.

Die sternförmige Anordnung der Längsachsen der Langlöcher erlaubt eine optimale Relativbewegung. Das gemeinsame Zentrum der Längsachsen der Langlöcher liegt bezüglich Standfestigkeit und Stabilität mit Vorteil unter einer Achse des Turboladers. Für Materialien die sich unter Temperatureinfluss bekanntermassen nur in eine Richtung stark ausdehnen, kann es freilich vorteilhaft sein, die Langlöcher derart anzuordnen, dass sich die Längsachsen nicht aller Langlöcher in einem gemeinsamen Zentrum treffen. bzw. anders als in Sternform.

Sind die Langlöcher gegen die Peripherie des Befestigungsfusses hin offen so ist die Relativbewegung des Gleitschuhes im Langloch weniger limitiert und auch ungewöhnlich starke Ausdehnungen werden durch die Befestigungsvorrichtung ohne Biegebeanspruchung der Schrauben aufgenommen. Ausserdem ist die maschinelle Bearbeitung des Befestigungsfusses einfacher und die Gleitschuhe lassen sich so leichter montieren.

Die Zahl n der Langlöcher liegt vorteilhaft bei n≥3. Dies wirkt sich günstig auf die Standfestigkeit aus. Bei 4 Langlöchern ist es sehr günstig die sternförmigen Längsachsen der Langlöcher im rechten Winkel zueinander auszurichten. Das ermöglicht günstige Relativbewegungen und eine gute Standfestigkeit.

Die Ausgestaltung der Gleitschuhe mit einem T-förmigem Querschnitt mit einem Fuss und zwei Armen erfüllt die Anforderungen für den Gleitschuh bestens. Der Fuss des T-förmigen Querschnitt füllt mit Spiel die Breite des Langloches aus. Seine Länge ist mit Vorteil grösser als seine Fussbreite zwecks besserer Führung im Langloch. Die Arme des T-förmigen Gleitschuhes überragen auf der dem Untergrund abgewandten Seite des Befestigungsfusses liegende Ränder des Langloches, was sich günstig auf die Führung des Gleitschuhes im Langloch auswirkt, zugleich aber auch für eine sehr gute Kraftübertragung der Klemmkraft des Befestigungselementes auf den Befestigungsfuss und den Untergrund sorgt. Wird als Befestigungselement z.B. eine Schraube oder ein Bolzen mit grossem Kopf verwendet, wirken die Arme des T-förmigem Querschnitts zudem wie eine Unterlegscheibe und verhindern bei der Relativbewegung ein zu Verschleiss führendes Aüfeinandergleiten von Schraubenkopf und Befestigungsfuss.

Für geschlossene Langlöcher muss die Länge des Gleitschuhfusses verständlicherweise kleiner sein als die Länge des Langloches, damit genügend Raum für die Relativbewegung des Gleitschuhes im Langloch bleibt. Bei gegen die Peripherie des Gleitschuhes hin offenen Langlöchern kann es für eine bessere Führung des Gleitschuhes günstig sein, wenn der Gleitschuhfuss etwa gleich lang oder sogar länger ist als das Langloch.

Die Fusshöhe des Gleitschuhfusses sollte etwa der Lochhöhe des Langloches entsprechen. Dies hilft mit ein Verkippen des Gleitschuhes im Langloch zu vermeiden und ermöglicht eine gute Führung der Schraube. Das Verhältnis der Gesamthöhe des Gleitschuhes zu seiner Länge sollte grösser 1 sein, um ein abkippen des Gleitschuhes und damit Biegebelastungen der Schraube zu vermeiden.

Die Arme des T-förmigen Gleitschuhes sind vorteilhaft elastisch ausgebildet, um die Klemmkräfte und die Gleitkräfte gut aufnehmen zu können.

Weitere bevorzugte Ausführungsformen sind Gegenstand weiterer abhängiger Patentansprüche.

### Kurze Beschreibung der Zeichnungen

Im folgenden wird der Erfindungsgegenstand anhand von bevorzugten Ausführungsbeispielen, Welche in den beiliegenden Zeichnungen dargestellt sind, näher erläutert. Es zeigen rein schematisch:
- Figur 1a) bis 1e): In verschiedenen Ansichten ein Gasaustrittsgehäuse eines Turboladers mit einem einstückig angeformten Befestigungsfuss entsprechend der erfindungsgemässen Befestigungsvorrichtung;
- Fig.2a) bis 6a): je einen in ein Langloch eingesetzten Gleitschuh mit Befestigungsschraube im Längsschnitt; und
- Fig. 2b) bis 6b): je einen in ein Langloch eingesetzten Gleitschuh mit Befestigungsschraube im Querschnitt.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen steht beispielhaft für den Erfindungsgegenstand und haben keine beschränkende Wirkung.

### Wege zur Ausführung der Erfindung

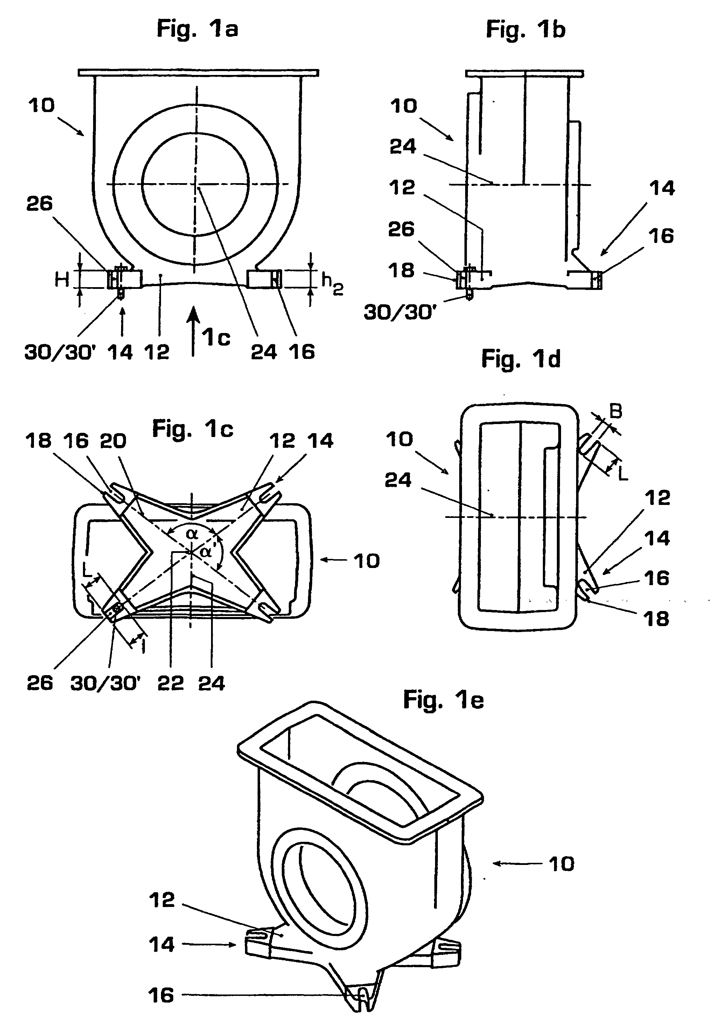

Die Figuren 1a) bis 1e) zeigen ein Gasaustrittsgehäuse 10 eines Turboladers mit einstückig angeformtem Befestigungsfuss 12 gemäss der erfindungsgemässen Befestigungsvorrichtung 14. In dem gezeigten Beispiel weist der Befestigungsfuss 12 vier Langlöcher 16 auf, die gegen die Peripherie 18 des Befestigungsfusses 12 offen sind. Die Langlöcher 16 sind mit ihren Längsachsen 20 sternförmig zueinander ausgerichtet. Die Längsachsen 20 haben ein gemeinsames Zentrum 22, das sich unter einer Achse 24 des Turboladers befindet (vgl. Fig. 1c). Die Grösse des Befestigungsfusses 12 die Anzahl n der Langlöcher 16 sowie der Winkel α, α' zwischen den Längsachsen 20 sind auf die Klemmkraft sowie das Gewicht und die spezielle Ausgestaltung des Turboladers abgestimmt. So weicht hier der Winkel α, bzw. α' zwischen den vier Langlöchern von dem im allgemeinen sehr günstigen Winkel von 90° ab. Die Peripherie 18 des Befestigungsfusses und damit in diesem Beispiel auch die Position der Langlöcher 16 gegenüber dem Gasaustrittsgehäuse 10 ist so gewählt, dass die Langlöcher 16 für eine Montage bzw. Demontage des Turboladers leicht zugänglich sind. In den Fig. 1a bis1c ist beispielhaft eines der Langlöcher 16 mit einem Gleitschuh 26 und einer in die dafür vorgesehene Öffnung 28 des Gleitschuhes 26 eingesetzten Schraube 30 gezeigt. Die Abmessungen der Langlöcher 16 und der Gleitschuhe 26 sind auf die Klemmlänge sowie das Gewicht und die Ausgestaltung des Turboladers abgestimmt. Wie aus Fig. 1c ersichtlich entspricht die Länge I des Gleitschuhes in diesem Beispiel etwa der Länge L des Langloches.

Die Gleitschuhe sind Vergütungsstahl gefertigt sind oberflächengehärtet oder mit einer verschleissfesten Beschichtung wie AFC o.ä. versehen.

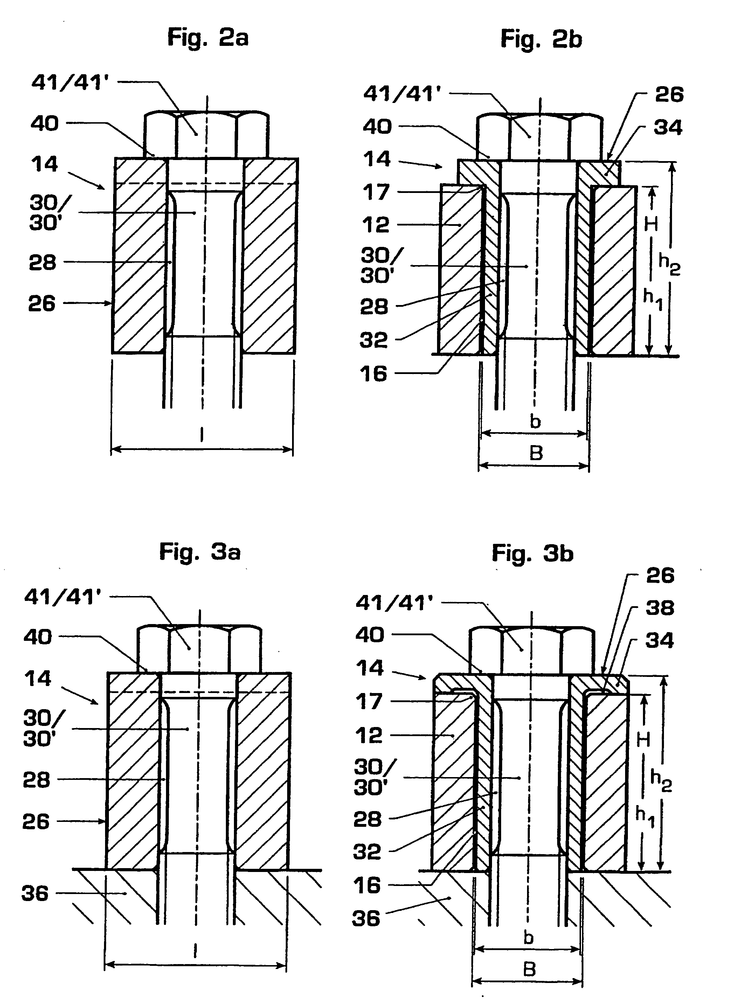

In den Fig. 2a) bis 6a) ist im Längsschnitt und in den Fig. 2b) bis 6b) ist im Querschnitt jeweils ein Teil der erfindungsgemässen Befestigungsvorrichtung 14 dargestellt, nämlich der Gleitschuh 26 mit der Öffnung 28, in welche als Befestigungselement 30 eine Schraube 30' eingesetzt ist. Wie bereits erwähnt, ist auch der Einsatz anderer, adäquater Befestigungselemente 30 wie z.B. Bolzen o.ä. denkbar. In den Figuren 3a) und 3b) ist ausserdem ein Teil des Untergrundes 36 dargestellt auf dem der Turbolader über das Gasaustrittsgehäuse mittels der Befestigungsvorrichtung 14 befestigt ist. In der jeweils mit b) bezeichneten Querschnittansicht ist ausserdem jeweils jener Teil des Befestigungsfusses 12 dargestellt, welcher das Langloch 16 in seiner Länge L begrenzt. In dieser Querschnittansicht ist der im wesentlichen T-förmige Querschnitt des Gleitschuhes 26 sehr gut zu erkennen, während in der jeweils mit a) bezeichneten Längsschnittansicht der Gleitschuh 26 als quaderförmiger Block erscheint.

Jeder Gleitschuh 26 weist in der Querschnittsansicht b) gut erkennbar einen Fuss 32 und zwei Arme 34 auf. Die Arme 32 überragen seitlich dem Untergrund 36 abgewandte Ränder 17 des Langloches 16. Auf ihrer dem Untergrund 36 abgewandten Seite weisen die Arme 34 eine sich entlang der Mittellängsachse des Gleitschuhes 26 erstreckendes und die zwei Arme 34 miteinander verbindendes Plateau 40 auf. Das Plateau 40 dient als Auflage für den Kopf 41 eines Befestigungselementes 30, in den gezeigten Beispielen 2a) bis 6b) für einen Schraubenkopf 41'. Die Fussbreite b des Fusses 32 des Gleitschuhes 26 ist so bemessen, dass der Fuss 32 mit Spiel die Breite B des Langloches 16 ausfüllt. Für eine bessere Führung des Gleitschuhes 26 im Langloch 16 ist die Fusslänge 1 des Fusses 32, die in der Regel der gesamten Länge I des Gleitschuhes entspricht, grösser als seine Fussbreite b. Die Fusshöhe h₁ entspricht im wesentlichen der Lochhöhe H des Langloches 16. Das Verhältnis von Länge I zu Gesamthöhe h₂ des Gleitschuhes ist grösser 1 (l/h₂>1). Auf diese Weise wird ein Verkippen des Gleitschuhes 26 im Langloch 16 und eine Biegebeanspruchung der Schraube 30' vermieden. Denkbar ist natürlich auch dass der Gleitschuh im Längsschnitt wie im Querschnitt T-förmig ausgebildet ist, womit die Länge I des Gleitschuhes 26 dann grösser wäre als eine Fusslänge I'.

Die in den Fig. 2a) bis 6b) dargestellten Ausführungsformen von Gleitschuhen 26 unterscheiden sich im wesentlichen in der Ausgestaltung der Arme 34. In den Fig. 2a), 2b) ist ein sehr einfacher Gleitschuh 26 mit relativ steifen, einen rechteckigen Querschnitt aufweisenden, Armen 34 abgebildet.

Die Arme 34 des in den Fig. 3a), 3b) abgebildeten Gleitschuhes weisen demgegenüber Aussparungen 38 auf ihrer dem Untergrund 36 zugewandten Seite auf. Diese Aussparungen 38 erlauben ein elastisches Nachgeben in Richtung der Höhe h₁, h₂, wodurch die Arme 34 immer mit einer leichten Vorspannung auf dem Befestigungsfuss 12 angeordnet sind.

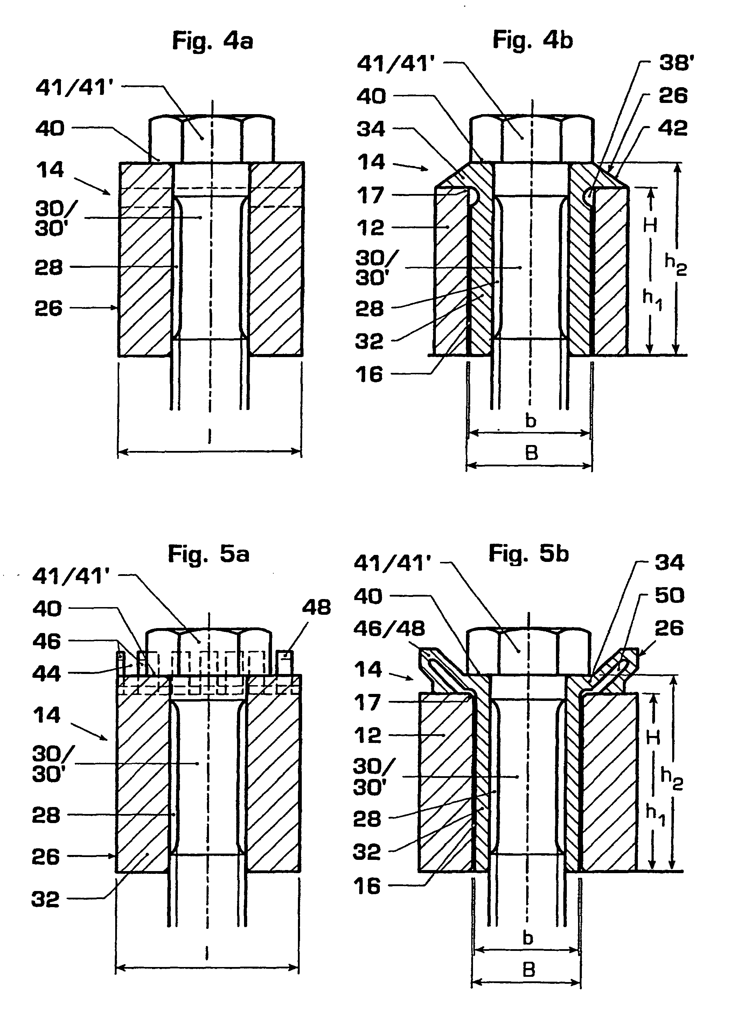

Der in den Fig. 4a), 4b) abgebildete Gleitschuh 26 weist eine Aussparung 38' im Übergangsbereich zwischen den Armen 34 und dem Fuss 32 auf. Vom Plateau 40 ausgehend weisen die Arme 34 sich gegen Aussen verjüngend, auf ihrer dem Untergrund 36 abgewandten Seite eine Abschrägung 42 auf. Die nutförmige Aussparung 38' im Fuss 32 und die sich gegen Aussen verjüngenden Arme 34 erhöhen die Flexibilität der Arme 34 und ermöglichen eine bessere Optimierung der Arme 34 bezüglich Spannung und Steifigkeit.

Die Arme 34 des in den Fig. 5a), 5b) abgebildeten Gleitschuhes 26 weisen von Aussen bis an das Plateau 40 heran in Längsrichtung voneinander beabstandete Ausnehmungen 44 auf, durch welche die Arme 34 in Segmente 46 unterteilt sind (vgl. Fig. 5a)). In diesem speziellen Beispiel sind die Segmente 46 in regelmässigen Abständen voneinander angeordnet. Die Segmente 46 weisen die Gesamthöhe h₂ überragende Vorsprünge 48 auf, die für eine höhere Flexibilität eine Höhlung 50 aufweisen. Die Segmentierung der Arme 34 und ihre federelastische Ausgestaltung erlauben eine Aufnahme der Relativbewegung vornehmlich durch elastische Auslenkung der Arme 34, wodurch der Verschleiss reduziert wird.

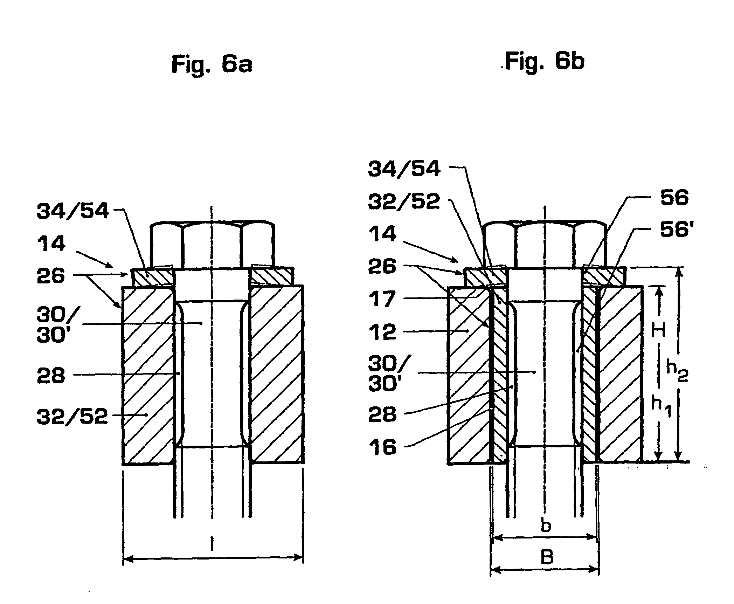

Eine weitere Ausgestaltungsform des Gleitschuhes ist in den Fig. 6a), 6b) dargestellt. Der Gleitschuh umfasst hier als Fuss 32 einen im wesentlichen quaderförmigen Steckkörper 52 und eine in Richtung der Höhe h₁, h₂ elastisch ausgebildete, separate Spannscheibe 54, welche die Arme 34 und das Plateau 40 bildet. In der Spannscheibe 54 und dem Steckkörper 32 sind in Deckung bringbare Löcher 56, 56' vorgesehen, die zusammen die Öffnung 28 zur Aufnahme des Befestigungselementes 30, 30' bilden. Die Spannscheibe 54 kann rund oder rechteckig ausgestaltet sein. Sie ist in diesem Beispiel wiederum aus Vergütungsstahl mit entsprechender Oberflächenbehandlung gefertigt. Der Steckkörper 52 dagegen ist aus günstigem Baustahl hergestellt.

Aus der gezeigten Vielfalt der Gleitschuhe 26 ist bereits zu entnehmen, dass weitere von den gezeigten Formen abweichende Ausgestaltungsformen des Gleitschuhes 26 denkbar sind. So ist es denkbar im Gleitschuh 26 mehr als eine Öffnung 28 zur Aufnahme von Befestigungselementen 30, 30' vorzusehen, dadurch kann das Risiko für das verkippen des Gleitschuhes 26 weiter verringert werden. Bei Einsatz von Schrauben 30' genügt dann ein geringeres Anzugsmoment. Auch ist die Anzahl der Langlöcher 16 im Befestigungsfuss 12 nicht auf 4 beschränkt. Es können auch drei in einem Dreieck zueinander angeordnete Langlöcher 16 vorgesehen sein, was die Montage, Demontage vereinfacht. Aber auch Lochzahlen n von 5, 6 und mehr sind denkbar. Abgestimmt auf die Ausgestaltung des Turboladers und dessen Gewicht kann eine höhere Zahl n an Langlöchern 16 für die Standsicherheit vorteilhaft sein, wenngleich dies einen höheren Aufwand bei der Montage bedeutet. Die Winkel α, α' zwischen den Längsachsen 20 sowie die Abmessungen und Ausgestaltung der Langlöcher 16 und Gleitschuhe 26 richtet sich nach Gestaltung und Gewicht des Turboladers sowie nach der vom Befestigungselement 30, 30' zu übertragenden Klemmkraft.

### Bezugszeichenliste

- 10: Gasaustrittsgehäuse
- 12: Befestigungsfuss
- 14: Befestigungsvorrichtung
- 16: Langloch
- 17: Rand
- 18: Peripherie
- 20: Längsachse
- 22: gemeinsames Zentrum
- 24: Achse Turbolader
- 26: Gleitschuh
- 28: durchgehende Öffnung
- 30: Befestigungselement
- 30': Schraube
- 32: Fuss
- 34: Arm
- 36: Untergrund
- 38: Aussparung
- 40: Plateau
- 41: Kopf
- 41': Schraubenkopf
- 42: Abschrägung
- 44: Ausnehmung
- 46: Segment
- 48: Vorsprung

- 50: Höhlung
- 52: Steckkörper
- 54: Spannscheibe
- 56, 56': Loch

- α, α': Winkel
- b: Fussbreite
- l: Länge
- h1: Fusshöhe
- h2: Gesamthöhe
- B: Breite Langloch
- L: Länge Langloch
- H: Lochhöhe Langloch

## Patentansprüche

1. Vorrichtung zum Befestigen eines Turboladers auf einem Untergrund (36) mit im Untergrund (36) fixierbaren Befestigungsmitteln und mit einem einstückig an ein Gasaustrittsgehäuse (10) des Turboladers angeformten Befestigungsfuss (12), der Löcher zur Aufnahme der Befestigungsmittel aufweist, wobei die Löcher voneinander beabstandete Langlöcher (16) sind, **dadurch gekennzeichnet, dass** ein Befestigungsmittel einen in ein Langloch (16) einsetzbaren Gleitschuh (26) und ein im Untergrund (36) fixierbares Befestigungselement (30, 30') umfasst, wobei das Befestigungselement (30, 30') durch eine dafür bestimmte durchgehende Öffnungen (28) des Gleitschuhes (26) durchführbar ist.

2. Befestigungsvorrichtung nach Anspruch 1, **dadurch gekennzeichnet, dass** die Längsachsen (20) der Langlöcher (16) sternförmig auf ein gemeinsames Zentrum (22) hin ausgerichtet sind und das gemeinsame Zentrum (22) der Längsachsen (20) vorzugsweise unter einer Achse (24) des Turboladers liegt.

3. Befestigungsvorrichtung nach Anspruch 1 oder 2, **dadurch gekennzeichnet, dass** die Langlöcher (16) gegen die Peripherie (18) des Befestigungsfusses (12) hin offen sind.

4. Befestigungsvorrichtung nach einem der Ansprüche 1 bis 3, **dadurch gekennzeichnet, dass** die Anzahl der Langlöcher (16) grösser, gleich 3 ist.

5. Befestigungsvorrichtung nach Anspruch 3, **dadurch gekennzeichnet, dass** bei einer Anzahl von Langlöchern (16) gleich 4 ein Winkel α zwischen den sternförmig ausgerichteten Längsachsen (20) etwa α = 90° beträgt.

6. Befestigungsvorrichtung nach einem der vorgängigen Ansprüche, **dadurch gekennzeichnet, dass** das Verhältnis Länge (I) zu Gesamthöhe (h₂) des Gleitschuhes (26) grösser, gleich 1 ist.

7. Befestigungsvorrichtung nach einem der vorgängigen Ansprüche , **dadurch gekennzeichnet, dass** der Gleitschuh (26) einen im wesentlichen T-förmigen Querschnitt aufweist, wobei der Fuss (32) des T-förmigen Gleitschuhes (26) mit Spiel die Breite (B) des Langloches (16) ausfüllt und wobei Arme (34) des T-förmigen Gleitschuhes (26) dem Untergrund (36) abgewandte Ränder (17) des Langloches (16) überragen, wenn der Gleitschuh (26) in das Langloch (16) eingesetzt ist.

8. Befestigungsvorrichtung nach Anspruch 7, **dadurch gekennzeichnet, dass** die Fusshöhe (h₁) des Fusses (32) des T-förmigen Gleitschuhes (26) etwa der Lochhöhe (H) des Langloches (16) entspricht.

9. Befestigungsvorrichtung nach Anspruch 7 oder 8, **dadurch gekennzeichnet, dass** die Arme (34) des T-förmigen Gleitschuhes (26) zumindest in Richtung der Höhe (h₁, h₂) elastisch ausgebildet sind.

10. Befestigungsvorrichtung nach einem der Ansprüche 7 bis 9, **dadurch gekennzeichnet, dass** die Arme (34) des T-förmigen Gleitschuhes (26) auf dessen Länge (I) mittels Ausnehmungen (44) segmentiert und die einzelnen Segmente (46) federelastisch ausgebildet sind.

11. Befestigungsvorrichtung nach einem der Ansprüche 7 bis 10, **dadurch gekennzeichnet, dass** der Fuss (32) des Gleitschuhes (26) im wesentlichen ein Steckkörper (52) ist und die Arme (32) des T-förmigen Gleitschuhes (26) im wesentlichen durch eine separate Spannscheibe (54) gebildet sind, wobei im Steckkörper (52) und in der Spannscheibe (54) in Deckung bringbare Löcher (56, 56') vorgesehen sind, die zusammen die Öffnung (28) zur Aufnahme des Befestigungselementes (30, 30') bilden.

12. Befestigungsvorrichtung nach einem der vorgängigen Ansprüche, **dadurch gekennzeichnet, dass** der Gleitschuh (26) mehrere durchgehende Öffnungen (28) zur Aufnahme von Befestigungselementen (30, 30') aufweist.

13. Gasaustrittsgehäuse (10) mit einstückig angeformtem Befestigungsfuss (12) mit einer Befestigungsvorrichtung (14) nach einem der vorgängigen Ansprüche.

## Claims

1. Device for fastening a turbocharger to a base (36), with fastening means capable of being fixed in the base (36) and with a fastening foot (12) which is integrally formed in one piece from a gas outlet casing (10) of the turbocharger and has holes for receiving the fastening means, the holes being long holes (16) spaced from one another, **characterized in that** the fastening means comprises a sliding shoe (26) capable of being inserted into a long hole (16) and a fastening element (30, 30') capable of being fixed in the base (36), the fastening element (30, 30') being capable of being led through a continuous orifice (28) intended for this purpose in the sliding shoe (26).

2. Fastening device according to Claim 1, **characterized in that** the longitudinal axes (20) of the long holes (16) are oriented in a star-shaped manner with a common centre (22) and the common centre (22) of the longitudinal axes (20) is preferably located below an axis (24) of the turbocharger.

3. Fastening device according to Claim 1 or 2, **characterized in that** the long holes (16) are open towards the periphery (18) of the fastening foot (12).

4. Fastening device according to one of Claims 1 to 3, **characterized in that** the number of long holes (16) is greater than or equal to 3.

5. Fastening device according to Claim 3, **characterized in that**, when the number of long holes (16) is equal to 4, an angle α between the longitudinal axes (20) oriented in a star-shaped manner amounts to about α = 90°.

6. Fastening device according to one of the preceding claims, **characterized in that** the ratio of length (1) to total height (h₂) of the sliding shoe (26) is greater than or equal to 1.

7. Fastening device according to one of the preceding claims, **characterized in that** the sliding shoe (26) has an essentially T-shaped cross section, the foot (32) of the T-shaped sliding shoe (26) filling the width (B) of the long hole (16) with play, and arms (34) of the T-shaped sliding shoe (26) projecting beyond edges (17) of the long hole (16) which face away from the base (36), when the sliding shoe (26) is inserted into the long hole (16).

8. Fastening device according to Claim 7, **characterized in that** the foot height (h₁) of the foot (32) of the T-shaped sliding shoe (26) corresponds approximately to the hole height (H) of the long hole (16).

9. Fastening device according to Claim 7 or 8, **characterized in that** the arms (34) of the T-shaped sliding shoe (26) are designed elastically at least in the direction of the height (h₁, h₂).

10. Fastening device according to one of Claims 7 to 9, **characterized in that** the arms (34) of the T-shaped sliding shoe (26) are segmented over its length (1) by means of recesses (44) and the individual segments (46) are designed resiliently.

11. Fastening device according to one of Claims 7 to 10, **characterized in that** the foot (32) of the sliding shoe (26) is essentially an insertion body (52) and the arms (32) of the T-shaped sliding shoe (26) are formed essentially by a separate tension disc (54), there being provided in the insertion body (52) and in the tension disc (54) holes (56, 56') which are capable of being brought into congruence and which together form the orifice (28) for receiving the fastening element (30, 30').

12. Fastening device according to one of the preceding claims, **characterized in that** the sliding shoe (26) has a plurality of continuous orifices (28) for receiving fastening elements (30, 30').

13. Gas outlet casing (10) with a fastening foot (12) integrally formed in one piece and having a fastening device (14) according to one of the preceding claims.

## Revendications

1. Dispositif pour fixer un turbocompresseur sur un support (36) avec des moyens de fixation fixables dans le support (36) et avec un pied de fixation (12) formé d'une pièce sur un carter d'échappement des gaz (10) du turbocompresseur qui présente des trous pour recevoir les moyens de fixation, dans lequel les trous sont des trous oblongs (16) espacés entre eux **caractérisé en ce qu'**un moyen de fixation comprend un coulisseau (26) insérable dans un trou oblong (16) et un élément de fixation (30, 30') fixable dans le support (36), l'élément de fixation (30, 30') pouvant être guidé au travers d'une ouverture traversante (28) du coulisseau (26) destinée à cet effet.

2. Dispositif de fixation selon la revendication 1, **caractérisé en ce que** les axes longitudinaux (20) des trous oblongs (16) sont orientés en forme d'étoile vers un centre commun (22) et que le centre commun (22) des axes longitudinaux (20) se trouve de préférence sous un axe (24) du turbocompresseur.

3. Dispositif de fixation selon la revendication 1 ou 2, **caractérisé en ce que** les trous oblongs (16) sont ouverts en direction de la périphérie (18) du pied de fixation (12).

4. Dispositif de fixation selon l'une quelconque des revendications 1 à 3, **caractérisé en ce que** le nombre des trous oblongs (16) est égal ou supérieur à 3.

5. Dispositif de fixation selon la revendication 3, **caractérisé en ce que**, pour un nombre de trous oblongs (16) égal à 4, un angle α entre les axes longitudinaux (20) orientés en forme d'étoile est d'environ α = 90°.

6. Dispositif de fixation selon l'une quelconque des revendications précédentes, **caractérisé en ce que** le rapport de la longueur (1) à la hauteur totale (h₂) du coulisseau (26) est égal ou supérieur à 1.

7. Dispositif de fixation selon l'une quelconque des revendications précédentes, **caractérisé en ce que** le coulisseau (26) présente une section transversale sensiblement en forme de T, le pied (32) du coulisseau en forme de T (26) remplissant avec du jeu la largeur (B) du trou oblong (16) et les bras (34) du coulisseau en forme de T (26) dépassant les bords (17) du trou oblong (16) du côté opposé au support (36) lorsque le coulisseau (26) est inséré dans le trou oblong (16).

8. Dispositif de fixation selon la revendication 7, **caractérisé en ce que** la hauteur de pied (h₁) du pied (32) du coulisseau en forme de T (26) correspond sensiblement à la hauteur de trou (H) du trou oblong (16).

9. Dispositif de fixation selon la revendication 7 ou 8, **caractérisé en ce que** les bras (34) du coulisseau en forme de T (26) sont au moins élastiques dans le sens de la hauteur (h₁, h₂).

10. Dispositif de fixation selon l'une quelconque des revendications 7 à 9, **caractérisé en ce que** les bras (34) du coulisseau en forme de T (26) sont segmentés sur sa longueur (1) au moyen de creux (44) et que les différents segments (46) sont élastiques.

11. Dispositif de fixation selon l'une quelconque des revendications 7 à 10, **caractérisé en ce que** le pied (32) du coulisseau (26) est pour l'essentiel un insert (52) et que les bras (32) du coulisseau en forme de T (26) sont formés pour l'essentiel par une rondelle séparée (54), dans l'insert (52) et dans la rondelle (54) étant prévus des trous (56, 56') réalisables à couvert qui forment ensemble l'ouverture (28) pour recevoir l'élément de fixation (30, 30').

12. Dispositif de fixation selon l'une quelconque des revendications précédentes, **caractérisé en ce que** le coulisseau (26) présente plusieurs ouvertures traversantes (28) pour recevoir des éléments de fixation (30, 30').

13. Carter d'échappement des gaz (10) avec un pied de fixation (12) formé d'une pièce avec un dispositif de fixation (14) selon l'une quelconque des revendications précédentes.
